# EUROPÄISCHE PATENTSCHRIFT

(11) **EP 3 596 344 B1**
(45) Veröffentlichungstag und Bekanntmachung des Hinweises auf die Patenterteilung: **03.03.2021**
(21) Anmeldenummer: 18826923.7
(22) Anmeldetag: 30.11.2018
(51) Int. Cl.: F16B 5/06, H01R 13/508, F16B 21/07, F16B 5/07, F16B 21/16, F16B 21/18, F16B 19/02

(54) **STECKVERBINDER**
PLUG-IN CONNECTOR
CONNECTEUR ENFICHABLE

(30) Priorität: 14.12.2017 DE 102017130005
(43) Veröffentlichungstag der Anmeldung: 22.01.2020
(73) Patentinhaber: HARTING Electric GmbH & Co. KG, 32339 Espelkamp (DE)
(72) Erfinder: SCHLEGEL, Bernard, 32369 Rahden (DE)
(86) Internationale Anmeldenummer: PCT/DE2018/100978
(87) Internationale Veröffentlichungsnummer: WO 2019/114866

(56) Entgegenhaltungen:
- EP-A2- 2 733 366
- DE-A1-102008 060 561
- US-A1- 2012 301 248

## Beschreibung

Die Erfindung geht aus von einem Steckverbinder nach der Gattung des unabhängigen Patentanspruchs 1.

Weiterhin geht die Erfindung aus von einer Steckverbindung nach der Gattung des Anspruchs 12, gebildet aus dem Steckverbinder und einem Gegensteckverbinder.

Weiterhin geht die Erfindung aus von einem Verfahren zum Ver- und Entriegeln eines Steckverbinders nach der Gattung der Verfahrensansprüche 13 und 14.

Verriegelbare Steckverbinder werden benötigt, um beispielsweise elektrische Signale und elektrische Energie betriebssicher zu übertragen.

### Stand der Technik

Im Stand der Technik sind asymmetrische, ringförmig ausgeführte Spiralfedern bekannt. Zuweilen werden sie auch als "schräg gewickelte Feder" und/oder unter dem Namen "Bal Seal-Feder" bezeichnet. Insbesondere sind solche Federn durch die US-Amerikanische Firma "Bal Seals Engineering" unter anderem aus einer Vielzahl von Patentanmeldungen bekannt geworden.

In der dafür grundlegenden Druckschrift EP 0 379 159 B1 ist die Bauform einer solchen asymmetrische Spiralfeder ausführlich dargestellt. Weiterhin wird ihre Funktion als abschirmenden Dichtung für elektronische/ elektromagnetische Schnittstellenkomponenten näher erläutert.

Die Druckschrift US 5,474,309 A beschreibt eine solche asymmetrische ringförmige Spiralfeder, die aus einer Vielzahl einzelner Spiralen gebildet ist, welche bevorzugt oval ausgeführt sind und jeweils eine große Achse und eine kleine Achse aufweisen.

Die Druckschrift EP 2 259 383 B1 offenbart einen Verbinder, der in der Praxis beispielsweise in Form eines Schlüsselanhängers zur komfortabel lösbaren mechanischen Befestigen von Gegenständen an einem Schlüsselbund genutzt werden kann. Dieser Verbinder besitzt einen in einer Gehäusebohrung angeordneten Stift. Die Gehäusebohrung besitzt eine Gehäusenut mit einer darin angeordneten verkanteten Spiralfeder. Die Spiralfeder besitzt eine große Achse und eine kleine Achse. Der Stift besitzt zwei Rillen, die in dieser Druckschrift als Stiftrille und zweite Rille bezeichnet sind. Die Spiralfeder ist durch die Gehäusenut und die Stiftrille in einer ersten Federstellung gehalten. Die zweite Rille des Stifts dient dazu, die verkantete Spiralfeder aufzunehmen, wenn der Stift in Einführrichtung tiefer in das Gehäuse in einer ersten Richtung eingeführt wird. Die zweite Rille ist größer als die Stiftrille. Dadurch kann die Spiralfeder zumindest zwei Stellungen einnehmen. In der ersten Federstellung ist eine Entnahme des Stifts aus dem Gehäuse entgegen der Einführrichtung verhindert. In einer zweiten Federstellung ist die Entnahme des Stifts aus dem Gehäuse entgegen der Einführrichtung aufgrund des zweiten Umdrehungswinkels der verkanteten Spiralfeder erlaubt.

Die Druckschrift US 2012/0301248 A1 offenbart eine Befestigungsvorrichtung zum Befestigen von zwei oder mehr Objekten aneinander und insbesondere eine Befestigungsvorrichtung, die einen Stift mit einem wellenförmigen Abschnitt und ein entsprechendes Gegengehäuse mit einem elastischen Vorspannelement zum Befestigen des Gegengehäuses entlang einer gewünschten Position am Stift enthält. Das Gegengehäuse kann dauerhaft am Stift einrasten oder vom Stift abnehmbar sein.

Die Druckschrift EP 2 733 366 A2 offenbart einen Verbinder, der abgeschrägte Schraubenfedern verwendet, um einen Stift an einem Gehäuse zu halten. Die konzentrisch ausgebildeten Federn ermöglichen eine Verriegelungskonfiguration, die mit höherer Kraft und Durchbiegung der zweiten Feder überwunden werden kann. Für eine Anordnung von zwei in einer Nut angeordneten und in Reihe betriebenen Federn wird vorgeschlagen, eine Nutwand gekrümmt auszuführen, um die Ver- und Entriegelungskräfte zu verringern.

Im Stand der Technik sind weiterhin Verriegelungen für Steckverbinder bekannt.

Die Druckschrift EP 0 731 534 B1 offenbart einen U-förmigen Verriegelungsbügel, der um Lagerzapfen einer Gehäusehälfte schwenkbar ist. Der U-förmige Verriegelungsbügel besitzt Taschen, in die jeweils ein Federelement eingefügt ist. Diese Federelemente wirken beim Schließen des Verriegelungsbügels derart auf Verriegelungszapfen der anderen Gehäusehälfte ein, dass die Gehäusehälften federnd gegeneinandergepresst sind. Weiterhin ist der Einsatz eines kipphebelartigen Verriegelungselements als vorteilhafte Ausgestaltung offenbart. Diese Bauform ermöglicht ein gutes Verhältnis zwischen Bedien- und Haltekraft.

Eine weitere Verriegelungsvorrichtung für ein zumindest zweiteiliges Gehäuse ist in der Druckschrift DE 10 2008 060 561 A1 beschrieben. An mindestens einer von zwei gegenüberliegenden Seitenwänden des Gehäuseoberteiles ist innerhalb kreisförmiger Anformungen jeweils ein von außen bedienbarer Betätigungsknopf angeordnet. Der Betätigungsknopf ist als kombinierter Dreh- und Druckknopf ausgebildet und steht im Eingriff mit einem im Inneren des Gehäuseoberteiles angeordneten Federhebel. Der Federhebel bewirkt in Abhängigkeit der Stellung des Betätigungsknopfes eine verriegelnde Verbindung zwischen den beiden Gehäuseteilen. Weiterhin wird offenbart, durch eine farbliche Markierung die verriegelnde Verbindung zwischen den beiden Gehäuseteilen hervorzuheben.

Nachteilig bei diesem Stand der Technik ist, dass die Bedienung einer solchen Bedieneinrichtung einen relativ großen Aufwand erfordert.

Das Deutsche Patent- und Markenamt hat in der Prioritätsanmeldung zu vorliegender Anmeldung den folgenden Stand der Technik recherchiert: EP 2 746 599 A2, US 2013/0149031 A1, WO 2009/126968 A1 und US 9,482,255 B2.

### Aufgabenstellung

Die Aufgabe der Erfindung besteht darin, die Bedienung einer Verriegelung eines Steckverbinders besonders komfortabel zu gestalten.

Diese Aufgabe wird durch die Merkmale der unabhängigen Ansprüche gelöst.

Ein Steckverbinder weist zumindest Folgendes auf:
- ein Steckverbindergehäuse mit mindestens einer Durchgangsöffnung, die eine Gehäusenut aufweist;
- mindestens einen Druckknopf, aufweisend einen zumindest teilweise in der mindestens einen Durchgangsöffnung angeordneten Druckknopfstift, der zumindest zwei umlaufende Rillen, nämlich eine Verriegelungsrille und eine Entriegelungsrille, besitzt;
- in jeder Durchgangsöffnung eine mit ihrem Außenbereich in der Gehäusenut angeordnete, ringförmig ausgeführte asymmetrische Spiralfeder, die relativ zur Durchgangsöffnung und zum Druckknopfstift zumindest zwei verschiedene Ausrichtungen, nämlich eine Verriegelungsausrichtung und eine Entriegelungsausrichtung, einnehmen kann,
   o wobei die asymmetrische Spiralfeder in ihrer Verriegelungsausrichtung ein Hineinbewegen des Druckknopfstifts in das Steckverbindergehäuse ermöglicht und ein Hinausbewegen des Druckknopfstifts aus dem Steckverbindergehäuse verhindert, und
   o wobei die asymmetrische Spiralfeder in ihrer Entriegelungsausrichtung ein Hinausbewegen des Druckknopfstifts aus dem Steckverbindergehäuse ermöglicht und ein Hineinbewegen des Druckknopfstifts in das Steckverbindergehäuse verhindert, und
   o wobei die asymmetrische Spiralfeder von ihrer Verriegelungsausrichtung in ihre Entriegelungsausrichtung kippbar ist, wenn sie mit ihrem Innenbereich in der Entriegelungsrille angeordnet ist,
   o wobei der Druckknopfstift zusätzlich noch eine dritte umlaufende Rille, nämlich eine Halterille, besitzt,
   o wobei die asymmetrische Spiralfeder von ihrer Entriegelungsausrichtung in ihre Verriegelungsausrichtung kippbar ist, wenn sie mit ihrem Innenbereich in der Halterille angeordnet ist.

Dabei und im Folgenden zeichnet sich die asymmetrische Spiralfeder, deren grundsätzliche Bauform im Stand der Technik zuweilen auch als "schräg gewickelte Feder" und/oder unter dem Namen "Bal Seal-Feder" bekannt geworden ist, im Wesentlichen dadurch aus, dass ihre Spiralen jeweils eine große Achse und eine kleine Achse aufweisen. Dadurch kann die Spiralfeder im vorliegenden Fall gegenüber der Durchgangsöffnung und dem Druckknopfstift zumindest zwei verschiedene Ausrichtungen, nämlich die Verriegelungsausrichtung und die Entriegelungsausrichtung, einnehmen. Insbesondere können die Spiralen oval ausgeführt sein. Weiterhin können sie bereits in ihrer Ausgangslage, also im nicht montierten Zustand und ohne Einwirkung mechanischer Kräfte, zur Ringebene eine erhebliche Neigung aufweisen. Die Ebene jeder Spirale kann mit der Ringebene also einen Winkel bilden, der erheblich von 90° abweicht, also z.B. größer ist als 98° oder kleiner ist als 82°, insbesondere größer ist als 106 ° oder kleiner ist als 74°, besonders bevorzugt größer ist als 114° oder kleiner ist als 66°. Zur Offenbarung einer für den vorgenannten Steckverbinder verwendbaren aus dem Stand der Technik bekannten asymmetrischen Spiralfeder wird an dieser Stelle ausdrücklich auf die Druckschriften EP 0 379 159 B1, US 5,474,309 A und EP 2 259 383 B1 verwiesen.

Ein System aus dem vorgenannten Steckverbinder und einem damit verriegelbaren Gegensteckverbinder ist dadurch charakterisiert, dass der Gegensteckverbinder ein Gegensteckverbindergehäuse aufweist, wobei das Gegensteckverbindergehäuse zumindest eine Verriegelungsöffnung aufweist, in welche der mindestens eine Druckknopf des Steckverbinders im verriegelten Zustand mit einem frei stehenden Ende seines Druckknopfstifts eingreift.

Ein Verfahren zur Verriegelung eines Steckverbindergehäuses, insbesondere des vorgenannten Steckverbindergehäuses, mit einem Gegensteckverbindergehäuse, insbesondere dem vorgenannten Gegensteckverbindergehäuse, weist folgende Schritte auf:
A. Zusammenfügen des Steckverbindergehäuses mit dem Gegensteckverbindergehäuse;
B. Hineindrücken eines Druckknopfes in das Steckverbindergehäuse in einer ersten Bewegungsrichtung um eine erste Wegstrecke, wobei
   b1. ein Druckknopfstift des Druckknopfes in eine Durchgangsöffnung des Steckverbindergehäuses hineingedrückt wird, wodurch
   b2. eine ringförmig ausgeführte, mit ihrem Außenbereich in einer Gehäusenut der Durchgangsöffnung angeordnete, asymmetrische Spiralfeder, die mit ihrem Innenbereich in einer umlaufenden Halterille des Druckknopfstifts zunächst in ihrer Entriegelungsausrichtung angeordnet ist, in ihre Verriegelungsausrichtung gekippt wird, woraufhin
C. die asymmetrische Spiralfeder entlang des Druckknopfstifts relativ zu diesem um die erste Wegstrecke bewegt und so in ihrer Verriegelungsausrichtung mit ihrem Innenbereich in eine umlaufende Verriegelungsrille des Druckknopfstifts gebracht wird, um dadurch das Steckverbindergehäuse (11) mit dem Gegensteckverbindergehäuse (21) zu verriegeln.

Insbesondere kann ein unbeabsichtigtes Lösen der Verriegelung durch die folgenden anschließenden Verfahrensschritte verhindert werden:
D. Anschlagen eines Druckknopfkopfes des Druckknopfstifts an mindestens einen in der Durchgangsöffnung angeordneten Polarisationszapfen, während sich die asymmetrische Spiralfeder mit ihrem Innenbereich in der Verriegelungsrille befindet und gleichzeitig
E. Verriegeln des Steckverbindergehäuses mit dem Gegensteckverbindergehäuse durch eine entsprechende Fixierung des Druckknopfstifts in seiner Verriegelungsposition am Steckverbindergehäuse.

Ein Verfahren zur Entriegelung eines gemäß des zuvor beschriebenen Verfahrens verriegelten Steckverbindergehäuses, insbesondere des vorgenannten Steckverbindergehäuses, von dem Gegensteckverbindergehäuse weist folgende Schritte auf:
F. Drehen des Druckknopfes um eine Symmetrieachse seines Druckkopfstifts in eine Entriegelungsstellung, wobei
   f1. mindestens eine Polarisationsausnehmung des Druckknopfstifts in die Nähe jeweils eines Polarisationszapfens der Durchgangsöffnung gebracht wird,
G. weiteres Hineindrücken des Druckknopfes in die Durchgangsöffnung des Steckverbindergehäuses in der ersten Bewegungsrichtung um eine zweite Wegstrecke, wobei
   g1 der Druckknopfkopf ebenfalls in die Durchgangsöffnung eintaucht, wobei seine mindestens eine Polarisationsausnehmung den jeweiligen Polarisationszapfen der Durchgangsöffnung umgreift, und wobei
   g2 die in ihrer Verriegelungsrichtung ausgerichtete Spiralfeder mit ihrem Innenbereich aus der umlaufenden Verriegelungsrille des Verriegelungsstifts des Druckknopfs entfernt wird und entlang des Druckknopfstifts um die zweite Wegstrecke zu der Entriegelungsrille des Druckknopfstifts gelangt,
H. woraufhin
   h1 ein noch tieferes Hineindrücken des Druckknopfs durch eine Innenkontur der Durchgangsöffnung verhindert wird, während gleichzeitig
   h2 die in ihrer Verriegelungsausrichtung ausgerichtete Spiralfeder mit ihrem Innenbereich in die Entriegelungsrille eintaucht,
I. woraufhin
   i1 ein weiteres Federelement den Druckknopf zunächst nur geringfügig in einer zweiten Bewegungsrichtung bewegt, welche der ersten Bewegungsrichtung entgegengesetzt ist, wobei
   i2 die mit ihrem Innenbereich in der Entriegelungsrille angeordnete Spiralfeder von ihrer Verriegelungsausrichtung in ihre Entriegelungsausrichtung kippt, woraufhin
J. der Druckknopfkopf von dem zweiten Federelement aus dem Steckverbindergehäuse in der zweiten Bewegungsrichtung sowohl um die zweite als auch um die erste Wegstrecke herausgedrückt wird, bis schließlich
K. die Spiralfeder mit ihrem Innenbereich in eine Halterille des Druckknopfstifts eintaucht und den Druckknopf in seiner Entriegelungsposition am Steckverbindergehäuse hält, wodurch
L. das Steckverbindergehäuse vom Gegensteckverbindergehäuse entriegelt wird.

Vorteilhafterweise kann der Druckknopf ein freistehendes Ende besitzen, das im montiertem Zustand in Einsteckrichtung weist. Mit diesem freistehenden Ende kann der durch die Durchgangsöffnung des Steckverbindergehäuses ins Innere des Steckverbindergehäuses geführte Druckknopfstift beispielsweise in eine Verriegelungsöffnung des Gegensteckverbindergehäuses eingreifen, um das Steckverbindergehäuse mit dem Gegensteckergehäuse zu verriegeln. Insbesondere kann das freistehende Ende des Druckknopfstifts konisch zulaufend ausgestaltet sein, wodurch bereits eine gewisse abdichtende Wirkung erzielbar ist, bei welcher die Gehäusehälften in Steckrichtung gegen einander gedrückt werden.

In einer weiteren bevorzugten Ausgestaltung kann das freistehende Ende des Druckknopfstifts mit einem weiteren Mechanismus zur Verriegelung des Steckverbindergehäuses mit dem Gegensteckverbindergehäuse zusammenwirken. Bevorzugter Weise kann dieser Mechanismus dazu dienen, die Kraft des eingeführten Druckknopfstifts rechtwinklig umzuleiten und das Steckverbindergehäuse und das Gegensteckverbindergehäuse bei der Verriegelung vorteilhafterweise besonders stark abdichtend aneinander heranzuziehen und/oder gegeneinander zu pressen. Insbesondere können an diesem Mechanismus die Gehäusekonturen und spezielle zusätzliche Bauteile beteiligt sein.

In Verfahrensschritt H kann die unter Punkt h1 beschriebene Verhinderung des noch tieferen Hineindrückens des Druckknopfs durch die Innenkontur der Durchgangsöffnung beispielsweise in Zusammenwirken mit dem weiteren Federelement und dem Druckknopfkopf verhindert werden. Beispielsweise kann das weitere Federelement in dieser Position des Druckknopfs bereits maximal komprimiert sein. Somit drückt der Druckknopfkopf in dieser Position gegen ein erstens Ende des bereits vollständig komprimierten weiteren Federelements und wird somit durch die Innenkontur, an welche das Federelement mit seinem zweiten Ende stößt, an einem noch tieferen Hineinbewegen ins Steckverbindergehäuse endgültig gehindert.

Ein Vorteil des Steckverbinders besteht in seiner besonders einfachen Bedienung, denn er kann mit einer einzigen Hand ver- und entriegelt werden. Sowohl die Ver- als auch die Entriegelung erfolgen insbesondere durch Zusammendrücken der beiden am Steckverbindergehäuse angeordneten Druckknöpfe.

Ein zusätzlicher Vorteil des Steckverbinders besteht darin, dass sein Verriegelungsmechanismus mechanisch sehr einfach und damit kostengünstig ausführbar ist. Vorteilhafterweise braucht der Verriegelungsmechanismus zur Fixierung (Verrastung) und zum Lösen (Entrastung) des Druckknopfes in entsprechenden Positionen und Richtungen am Steckverbindergehäuse nur sehr wenige Bauteile zu umfassen, nämlich den Druckknopf, die asymmetrische Spiralfeder und das zur Aufbringung der Rückstellkraft vorgesehene Federelement, sowie weiterhin selbstverständlich das mit dem Gegensteckverbindergehäuse zu verriegelnde Steckverbindergehäuse selbst, das die dazugehörige Durchgangsöffnung mit den entsprechenden Konturen aufweist.

Ein weiterer Vorteil besteht darin, dass die Ver- und Entriegelung des Steckverbinders in ihrer Anwendung weitgehend selbsterklärend, ähnlich einer sogenannten "Kugelschreibermechanik", bedienbar ist. Auch die im vorgenannten Entriegelungsverfahren unter Punkt F. beschriebene, zur Entriegelung ggf. notwendige oder zumindest vorteilhafte Drehung des Druckknopfs kann insbesondere von der Form und/oder der Farbe und/oder der Haptik und/oder entsprechenden Geräuschen des Druckknopfes und/oder des Steckverbindergehäuses, insbesondere in Zusammenwirkung des Druckknopfes mit dem Steckverbindergehäuse, derart unterstützt werden, dass sich auch dieser Teil der Bedienung dem geneigten Benutzer selbsterklärend offenbart.

Vorteilhafte Ausgestaltungen der Erfindung sind in den Unteransprüchen angegeben.

Der Vollständigkeit halber sei erwähnt, dass der verriegelbare Steckverbinder in einer besonders bevorzugten Ausgestaltung zumindest einen im Steckverbindergehäuse fixierten Kontaktträger aufweist. In dem Kontaktträger, der auch als Isolierkörper bezeichnet wird, ist zumindest ein Kontakt angeordnet. Insbesondere handelt es sich dabei um einen elektrischen und/oder optischen und/oder pneumatischen Kontakt. Beispielsweise besitzt ein solcher Kontakt einen Steckbereich und einen Kabelanschlussbereich. Dieser Kabelanschlussbereich dient der Versorgung der Kontakte mit entsprechenden digitalen und/oder analogen Signalen und/oder mit Energie. Weiterhin kann im Steckverbindergehäuse zumindest eine Kabeleinführöffnung zur Einführung eines elektrischen und/oder optischen und/oder hydraulischen Kabels angeordnet sein. Insbesondere kann der Steckverbinder Mittel zur Fixierung des eingeführten Kabels aufweisen, beispielsweise eine Kabelverschraubung. Steckseitig ist der Steckverbinder unter anderem durch eine entsprechende Stecköffnung und insbesondere durch ein entsprechendes sogenanntes "Steckgesicht" zum Stecken mit einem entsprechenden Gegensteckverbinder, z. B. zur Signal- und/oder Energieübertragung, vorgesehen. Der Steckverbinder kann auch einen sogenannten "Halterrahmen" sowie mehrere darin angeordnete Isolierkörper in Form sogenannter "Steckverbindermodule" aufweisen. Weiterhin kann der Steckverbinder zumindest teilweise aus Metall bestehen und für hohe Stromstärken und/oder Spannungen ausgelegt sein, also z. B. Stromstärken über 50 Ampere, insbesondere größer als 100 Ampere, bevorzugt Stromstärken größer als 250 Ampere, insbesondere Stromstärken größer 500 Ampere. Alternativ oder ergänzend können Spannungen über 60 V, insbesondere über 220 V, beispielsweise über 600 V also auch Spannungen über 1000 V über einen solchen Steckverbinder übertragen werden. Zur Schutzerdung kann der Steckverbinder zumindest einen PE ("Protection Earth")-Kontakt beispielsweise in Form einer PE-Schraube aufweisen.

Bevorzugt handelt es sich bei dem Steckverbinder um einen Rechtecksteckverbinder. Das Steckverbindergehäuse kann somit zwei einander parallel gegenüberliegende Breitseiten und rechtwinklig dazu zwei einander parallel gegenüberliegende Schmalseiten aufweisen. Weiterhin kann das Steckverbindergehäuse zwei Durchgangsöffnungen besitzen, von denen bevorzugt jeweils eine in jeder der beiden Schmalseiten angeordnet ist. Der Steckverbinder kann weiterhin zwei Druckknöpfe und zwei asymmetrische Spiralfedern besitzen, wobei jeder der Druckknöpfe mit seinem Druckknopfstift und jeweils einer der asymmetrischen Spiralfedern in jeweils einer der Durchgangsöffnungen angeordnet ist. Dies hat den Vorteil der vereinfachten Bedienung, da zur Verriegelung lediglich die beiden Druckknöpfe aufeinander zu bewegt werden müssen, d. h. sie können vom Benutzer vorteilhafterweise mit einer Hand zusammengedrückt werden. Auch lässt sich diese Art der Bedienung besonders vorteilhaft automatisieren, beispielsweise durch eine entsprechende elektromechanische Vorrichtung. Auf diese Weise kann beispielsweise auch ein "Ziehen unter Last" verhindert werden.

In einer bevorzugten Ausgestaltung ist die Entriegelungsrille und/oder die Halterille jeweils tiefer und/oder breiter als die Verriegelungsrille. Dies hat den Vorteil, dass die Spiralfeder in der Entriegelungs- und/oder Halterille ein ausreichendes "Spiel" besitzt, um ihre jeweilige Ausrichtung gemäß der Bewegungsrichtung des Druckknopfstifts zu ändern.

Insbesondere kann die Verriegelungsrille am Druckknopfstift zwischen der Entriegelungsrille und der Halterille angeordnet sein. Dies hat den Vorteil, dass sich der Druckknopfstift in dem Bereich zwischen seiner Halterille und seiner Entriegelungsrille mit seiner Verriegelungsrille an der asymmetrischen Spiralfeder vorbei bewegen kann. In der Entriegelungsrille und der Halterille kann dabei jeweils eine Umkehr der Ausrichtung der asymmetrischen Spiralfeder stattfinden. Taucht die in ihrer Verriegelungsausrichtung ausgerichtete Spiralfeder mit ihrem Innenbereich in die Verriegelungsrille ein, so bewirkt dies vorteilhafterweise eine besonders starke Verrastung des Druckknopfs gegen sein Hinausbewegen aus dem Steckverbindergehäuse und erhöht damit vorteilhafterweise die Betriebssicherheit der Steckverbindung. Der Druckknopf befindet sich dann in seiner das Steckverbindergehäuse verriegelnden Position.

In einer bevorzugten Ausgestaltung besitzt der Druckknopf, insbesondere seinem frei stehenden Ende gegenüberliegend, einen Druckknopfkopf, der einen größeren Durchmesser besitzt als der Druckknopfstift. Alternativ oder ergänzend kann der Druckknopf auch Anformungen und/oder Ausnehmungen und/oder weitere Anschlagmittel besitzen. Befindet sich der Druckknopf in seiner das Steckverbindergehäuse mit dem Gegensteckverbindergehäuse verriegelnden Position (Verriegelungsposition) und ist außerdem in seine Verriegelungsstellung gedreht, so kann der Druckknopf mit seinem Druckknopfkopf, oder gegebenenfalls mit seinen Anformungen und/oder zumindest mit einem Rand der jeweiligen Ausnehmungen und/oder mit seinen weiteren Anschlagmitteln, gegen mindestens ein in der Durchgangsöffnung angeordnetes Polarisationsmittel anschlagen. Bei diesem Polarisationsmittel handelt es sich bevorzugt um einen Polarisationzapfen. Es kann sich aber in einer alternativen und/oder ergänzenden Ausgestaltung auch um eine Polarisationsausnehmung und/oder eine Polarisationsanformung und/oder ein weiteres Polarisationsmittel handeln.

Dadurch ist bereits in seiner Verriegelungsposition bei gleichzeitiger Verriegelungsstellung ein tieferes Hineindrücken des Druckknopfs in das Steckverbindergehäuse zunächst verhindert. Dies ist besonders vorteilhaft, weil durch die Verriegelungsstellung ein unbeabsichtigtes Entriegeln des Steckverbindergehäuses vom Gegensteckverbindergehäuse verhindert wird. Gleichzeitig wird ein Herausbewegen des Druckknopfs aus dem Steckverbindergehäuse durch die verriegelnde Ausrichtung der asymmetrischen Spiralfeder verhindert, wobei dieser Effekt noch dadurch verstärkt wird, dass sich die asymmetrische Spiralfeder mit ihrem Innenbereich in die Verriegelungsrille eingreift. In diesem Zustand ist der Druckknopf in seiner verriegelnden Position besonders betriebssicher am Steckverbindergehäuse fixiert.

In einer bevorzugten Ausgestaltung besitzt der Druckknopfkopf zur Entriegelung mindestens eine Polarisationsausnehmung. Durch eine entsprechende Drehung des Druckknopfs um die Achse seines bevorzugt rotationssymmetrisch ausgeführten Druckknopfstifts kann die mindestens eine Polarisationsausnehmung in die Nähe z. B. des mindestens einen Polarisationszapfens der Durchgangsöffnung des Steckverbindergehäuses gebracht werden. Dadurch lässt sich der Druckknopf aus seiner die Steckverbindung verriegelnden Position heraus zur Entriegelung noch tiefer in das Steckverbindergehäuse hineindrücken, wobei die mindestens eine Polarisationsausnehmung den mindestens einen Polarisationszapfen umgreift. Somit kann die Spiralfeder mit ihrem Innenbereich in die Entriegelungsrille des Druckknopfstifts gelangen, dort in ihre Entriegelungsausrichtung kippen und so eine anschließende Entriegelung des Steckverbindergehäuses vom Gegensteckverbindergehäuse ermöglichen.

Mit anderen Worten kann in dieser vorteilhaften Ausgestaltung der Druckknopf aus dieser Verriegelungsposition heraus nur dann noch tiefer in das Steckverbindergehäuse eindringen, wenn der Druckknopf zuvor durch eine Rotation um die Achse seines Druckknopfstifts in einer geeigneten Entriegelungsstellung ausgerichtet wurde. Dies ist von besonderem Vorteil, weil dadurch ein unbeabsichtigtes Entriegeln verhindert wird. Insbesondere wird dadurch verhindert, dass bereits beim Verriegeln der Druckknopf tiefer als zur Verriegelung notwendig in des Steckverbindergehäuse hineingedrückt wird und somit unerwünschterweise sofort wieder eine versehentliche Entriegelung auslöst.

Die Erfindung macht sich dabei insbesondere einen bei der Entwicklung empirisch gefundenen Nebeneffekt zunutze, der darin besteht, dass sich der Druckknopf bei der Ver- und Entriegelung automatisch zumindest geringfügig um die Symmetrieachse des Druckknopfstifts dreht, sofern seine Polarisationsausnehmung nicht in mechanischem Kontakt mit dem Polarisationszapfen steht. Dieser Effekt kann beispielsweise durch die spezielle Ausführung des weiteren Federelements, das insbesondere in einer Kegelfeder besteht, hervorgerufen werden. Falls in anderen Ausgestaltungen ein solcher Effekt nicht immer automatisch stattfindet, kann er ohne großen Aufwand durch dem Fachmann bekannte Mittel, z. B. durch geeignete, z. B. gewindeartige Konturen des Polarisationsstifts und/oder der Durchgangsöffnung oder auch durch zusätzliche entsprechende Bauteile einfach erzeugt werden. Weiterhin kann der Druckknopf auch vom Benutzer händisch in seine Verriegelungsposition gedreht werden, wobei die entsprechende Ausrichtung durch Beschriftungen, grafische und/oder farbliche Markierungen, haptische und/oder akustische Merkmale u. ä. erleichtert werden kann, wie im Folgenden noch näher ausgeführt wird.

Vorteilhafterweise ist der Druckknopf somit in seiner das Steckverbindergehäuse an dem Gegensteckverbindergehäuse verriegelnden Position in der Durchgangsöffnung verrastbar, indem der Innenbereich der in ihrer Verriegelungsausrichtung ausgerichteten Spiralfeder in der Verriegelungsrille angeordnet ist, während gleichzeitig ein tieferes Einstecken des Druckknopfs durch die Polarisationszapfen verhindert ist. Dadurch ist eine besonders große Betriebssicherheit der Verriegelung gewährleistet.

In einer bevorzugten Ausgestaltung kann der Steckverbinder somit mindestens das eine zusätzliche Federelement aufweisen, bei dem es sich bevorzugt um eine weitere Spiralfeder, insbesondere eine Kegelfeder, handelt. Dieses weitere Federelement dient zum Aufbringen einer Gegenkraft (Rückstellkraft) zur händischen Betätigung bei der Verriegelung und dient somit zum automatischen Hinausbewegen des Druckknopfs aus dem Steckverbindergehäuse bei der Entriegelung. Das weitere Federelement kann beispielsweise zwischen der besagten Innenkontur der Durchgangsöffnung und dem Druckknopfkopf angeordnet sein und an diesen beiden Komponenten angreifen, um eine von der Innenkontur weg gerichtete Kraft auf den Druckknopf auszuüben. Dadurch ist das weitere Federelement geeignet, den Druckknopfkopf von der Innenkontur weg und damit aus dem Steckverbindergehäuse heraus und den gesamten Druckknopf am Steckverbindergehäuse zurück in seine Halteposition zu drücken.

Das jeweilige Kippen der zwischen ihrer Ent- und ihrer Verriegelungsrichtung kann insbesondere durch ein Hinein- bzw. Hinausbewegen des Druckknopfstifts in bzw. aus dem Steckverbindergehäuse bewirkt werden. Einerseits kann die asymmetrische Spiralfeder durch die Rückstellkraft des zweiten Federelements von ihrer Verriegelungsausrichtung in ihre Entriegelungsausrichtung kippen, während sie mit ihrem Innenbereich in der Entriegelungsrille angeordnet ist. Andererseits kann die Spiralfeder durch ein händisches Hineinbewegen des Druckknopfstifts in das Steckverbindergehäuse auch von ihrer Entriegelungsausrichtung in ihre Verriegelungsausrichtung kippen, während sie mit ihrem Innenbereich in der Halterille angeordnet ist.

Weiterhin sind vorteilhafte Ausgestaltungen denkbar, welche dem Benutzer die Bedienung erklären und damit vereinfachen. Wie bereits erwähnt ist das Hineindrücken des Druckknopfs zum Ver- und Entriegelung des Steckverbinders in seiner Anwendung vorteilhafterweise weitgehend selbsterklärend. Schließlich ähnelt eine entsprechende Bedienung einer sogenannten "Kugelschreibermechanik", da sowohl die Ver- als auch die Entriegelung durch ein Hineindrücken des Druckknopfs erfolgt. Ein Hineindrücken des Druckknopfs bietet sich als einzig sinnvolle Bedienung schließlich auch ganz offensichtlich an.

Weiterhin kann die im vorgenannten Entriegelungsverfahren unter Punkt F. beschriebene, zur Entriegelung ggf. weiterhin notwendige oder zumindest vorteilhafte Drehung des Druckknopfs dem Benutzer zum besseren Verständnis folgendermaßen erläutert werden:
Der Druckknopf und/oder das Steckverbindergehäuse im Bereich des Druckknopfes kann farbig markiert sein. Beispielsweise können sich in der Entriegelungsstellung des Druckknopfs durchgehende Linienstrukturen über den Druckknopf und das Steckverbindergehäuse ergeben. Alternativ oder ergänzend können am Druckknopf und am Steckverbindergehäuse Symbole vorgesehen sein, beispielsweise Pfeil- und/oder Sperrsymbole. In einer bevorzugten Ausgestaltung besitzt sowohl der Druckknopf als auch das Steckverbindergehäuse ein Pfeilsymbol. Zeigen beide Pfeilsymbole in die gleiche Richtung, so befindet sich der Druckknopf in seiner Entriegelungsstellung.

Alternativ oder ergänzend kann das Steckverbindergehäuse im Bereich des Druckknopfes eine spezielle dreidimensionale Form besitzen, an die sich der Druckknopf in seiner Entriegelungsstellung kontinuierlich anschließt, so dass diese Entriegelungsstellung zudem auch ertastbar ist, was bei der Benutzung unter schwierigen Lichtbedingungen, z. B. im Bühnenbereich, von besonderem Vorteil ist.

Beim Überführen in seine Entriegelungsstellung kann der Druckknopf zusammen mit dem Steckverbindergehäuse ein hörbares Geräusch erzeugen, das erfahrungsgemäß - oder auch gemäß empirischer Untersuchungen - von der Mehrheit der Benutzer mit einer Entrastung assoziiert wird. Alternativ oder ergänzend kann beim Verriegeln auch ein in der Regel als verrastend empfundenes Geräusch erzeugt werden.

Dies sind lediglich einige aufgeführte Beispiele; dem entsprechenden Fachmann sind eine Vielzahl ähnlich bedienungserleichternder Ausgestaltungen geläufig.

### Ausführungsbeispiel

Ein Ausführungsbeispiel der Erfindung ist in den Zeichnungen dargestellt und wird im Folgenden näher erläutert. Es zeigen:
- Fig. 1a: eine dem Stand der Technik entsprechende, asymmetrische, ringförmig ausgeführte Spiralfeder;
- Fig. 1b, c: die vorgenannte Spiralfeder in zwei verschiedenen Ansichten;
- Fig. 2a - d: eine dem Stand der Technik entsprechende ver- und entriegelnde Anwendung einer solchen Spiralfeder;
- Fig. 3a: eine Verriegelungseinrichtung in einer Explosionsdarstellung;
- Fig. 3b - c: eine Kegelfeder der Verriegelungseinrichtung;
- Fig. 3d: einen Druckknopf der Verriegelungseinrichtung mit einem Druckknopfkopf und einem Druckknopfstift mit mehreren umlaufenden Rillen;
- Fig. 3e: eine Durchgangsöffnung eines Steckverbindergehäuses mit einer Nut, einer Innenkontur und zwei Polarisationszapfen;
- Fig. 4a - f: den Vorgang der Ver- und Entriegelung im Querschnitt durch die Verriegelungseinrichtung;
- Fig. 4g, h: den Druckknopfkopf in einer Draufsicht in einer Verriegelungs- und einer Entriegelungsstellung;
- Fig. 5a - c: Steckverbindung mit zwei entriegelten, verriegelten und zur Entriegelung ausgerichteten Druckknöpfen.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

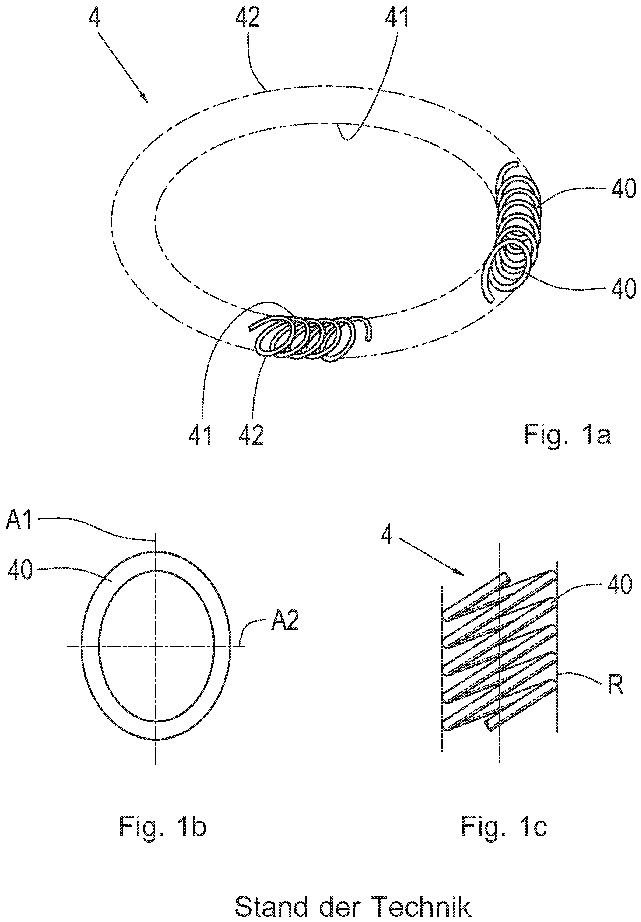

Die Fig. 1a - c zeigen eine dem Stand der Technik entsprechende, asymmetrische, ringförmig ausgeführte Spiralfeder 4. In der Fig. 1a ist die Spiralfeder 4 in ihrer tatsächlichen Form nur abschnittsweise gezeigt; tatsächlich verläuft sie jedoch in Form eines geschlossenen Ringes, der in der Zeichnung mittels einer gestrichelt-gepunkteten Linie angedeutet ist. Die einzelnen Spiralen 40 besitzen jeweils eine ovale Form mit einer großen Achse A1 und einer kleinen Achse A2, die in der Fig. 1b dargestellt und bezeichnet sind. Die Fig. 1c zeigt die Spiralfeder 4 in einer Seitenansicht. Dabei ist eine starke Schrägstellung gegenüber der Ringebene R gut zu erkennen.

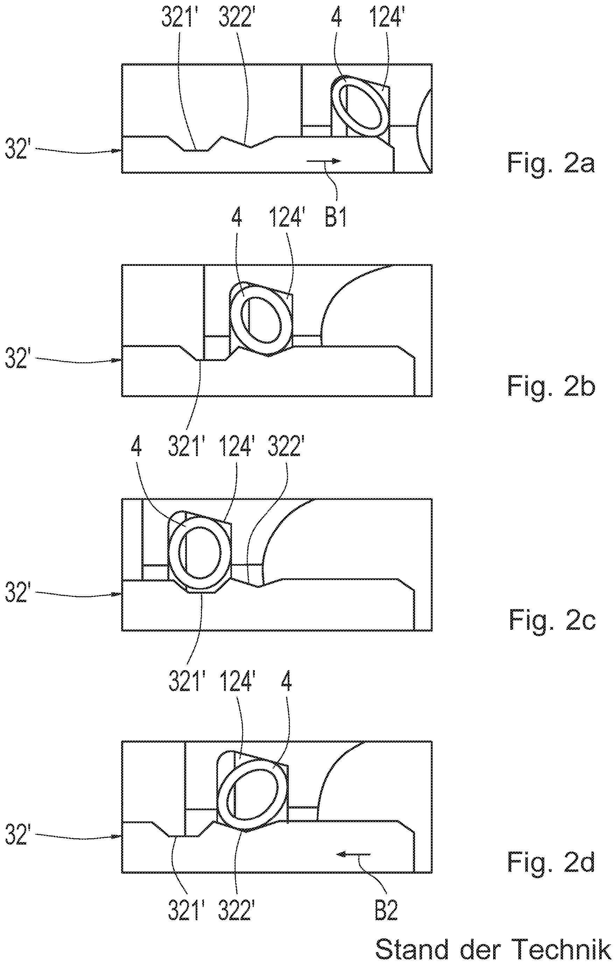

Die Fig. 2a - d zeigen eine dem Stand der Technik entsprechende ver-und
entriegelnde Anwendung einer solchen Spiralfeder 4.

Ein darin zumindest abschnittsweise dargestellter mechanischer Verbinder besitzt, wie in der Fig. 2a gezeigt, einen in einer Gehäusebohrung 12' eines Steckverbindergehäuses 11 angeordneten Stift 32'. Die Gehäusebohrung 12' besitzt eine Gehäusenut 124' mit der darin angeordneten asymmetrischen Spiralfeder 4. Der Stift 32' besitzt zwei Rillen, nämlich eine Verriegelungsrille 322' und eine Entriegelungsrille 321'. Die Spiralfeder 4 ist, wie auch in der Fig. 2b dargestellt, durch die Gehäusenut 124' und die Verriegelungsrille 322' in einer Verriegelungsausrichtung gehalten, d. h. ihre große Achse A1 ist in der Zeichnung linksgeneigt. Die Entriegelungsrille 321' des Stifts 32' dient dazu, die verkantete Spiralfeder 4, wie in der Fig. 2c dargestellt, in einem zweiten Umdrehungswinkel aufzunehmen, wenn der Stift 32' tiefer in das Steckverbindergehäuse 11 in einer ersten Bewegungsrichtung B1 eingeführt wird.

Grundsätzlich kann die Spiralfeder 4 zumindest zwei Ausrichtungen einnehmen. In ihrer Verriegelungsausrichtung, wie sie beispielsweise in den Fig. 2a und 2b dargestellt ist, ist ein Einführen des Stifts 32' in das Steckverbindergehäuse 11 in der ersten Bewegungsrichtung B1 ermöglicht. Gleichzeitig verhindert die Spiralfeder 4 in dieser Verriegelungsausrichtung eine Entnahme des Stifts 32' entgegen der Einführrichtung aus dem Steckverbindergehäuse 11. Mit anderen Worten ist eine Bewegung des Stifts 32' in einer zweiten Bewegungsrichtung B2, verhindert, wobei die zweite Bewegungsrichtung B2 der ersten Bewegungsrichtung B1 entgegengesetzt ist.

Im Gegensatz dazu ist in einer Entriegelungsausrichtung der Spiralfeder 4, wie sie in der Fig. 2d dargestellt ist, die Entnahme des Stifts 32' aus dem Steckverbindergehäuse 11 entgegen der Einführrichtung, also in der zweiten Bewegungsrichtung B2, erlaubt. Gleichzeitig ist ein tieferes Einstecken in der ersten Bewegungsrichtung B1 verhindert.

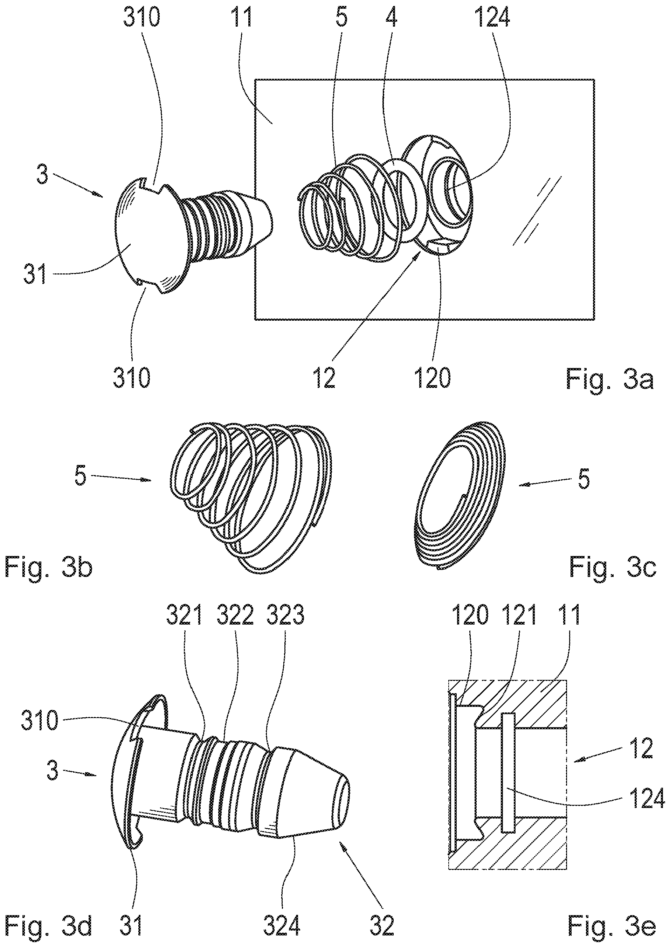

Die Fig. 3a zeigt eine Verriegelungseinrichtung eines Steckverbindergehäuses 11 in einer Explosionsdarstellung. Für diese Verriegelungseinrichtung besitzt das hier nur teilweise gezeigte Steckverbindergehäuse 11 eine Durchgangsöffnung 12. Weiterhin besitzt die Verriegelungseinrichtung eine asymmetrische Spiralfeder 4, die hier nur schematisch dargestellt ist, ein weiteres Federelement, bei dem es sich um eine Kegelfeder 5 handelt, und einen Druckknopf 3.

Die Fig. 3b und 3c zeigen die Kegelfeder 5 in entspanntem und in komprimiertem Zustand. Die Kegelfeder 5 dient dazu, auf den eingeführten Druckknopf 3 eine entsprechende Rückstellkraft auszuüben, um ihn gegebenenfalls zur Entriegelung wieder aus dem Steckverbindergehäuse 11 herauszudrücken.

Die Fig. 3d zeigt den Druckknopf 3 detailliert. Der Druckknopf 3 besitzt an einem Ende einen im Wesentlichen tellerförmigen Druckknopfkopf 31. Dem Druckknopfkopf 31 gegenüberliegend besitzt der Druckknopf 3 ein freistehendes Ende 324, das einen konischen Verlauf aufweist.

An dem Rand des Druckknopfs 31 sind einander gegenüberliegend zwei Polarisationsausnehmungen 310 angeordnet. An den Druckknopfkopf 31 schließt sich ein Druckknopfstift 32 an. An dem Druckknopfstift 32 sind jeweils umlaufend eine Entriegelungsrille 321, eine Verriegelungsrille 322 und eine Halterille 323 angeordnet. Die Entriegelungsrille 321 und die Halterille 323 sind jeweils tiefer als die Verriegelungsrille 322.

Die Fig. 3e zeigt die Durchgangsöffnung 12, die in dem Steckverbindergehäuse 11, nämlich in einer Gehäusewand des Steckverbindergehäuses 11, angeordnet ist. Darin sind einander gegenüberliegend zwei Polarisationszapfen 120 zum Zusammenwirken mit dem Druckknopfkopf 31, insbesondere mit den darin angeordneten Polarisationsausnehmungen 310, angeordnet.

Durch die Polarisationszapfen 120 kann der montierte Druckknopf 3, ausgehend von seiner die Steckverbindung entriegelnden Halteposition, zunächst nur um eine erste Wegstrecke in das Steckverbindergehäuse 11 eingesteckt werden, bis nämlich sein Druckknopfkopf 31 gegen die Polarisationszapfen 120 anschlägt. In diesem Zustand befindet sich der Druckknopf 3 gegenüber dem Steckverbindergehäuse 11 in seiner Verriegelungsposition und zudem in seiner Verriegelungsstellung. Um den Druckknopf 3 nun auch noch um eine zusätzliche zweite Wegstrecke in das Steckverbindergehäuse 11 hineindrücken zu können, ist es zunächst notwendig, den Druckknopf von seiner Verriegelungsstellung in seine Entriegelungsstellung zu drehen, d. h. die Polarisationsausnehmungen 310 des Druckknopfkopfs 31 durch Rotation des Druckknopfs 3 um die Symmetrieachse seines Druckknopfstifts 32 in die Nähe der Polarisationszapfen 120 zu bringen, so dass die Polarisationsausnehmungen 310 die Polarisationszapfen 120 bei einem dadurch ermöglichten weiteren Hineindrücken umgreifen.

An die Polarisationszapfen 120 anschließend besitzt das Steckverbindergehäuse 11 in seiner Durchgangsöffnung 12 eine Innenkontur 121 in Form einer konzentrischen, ringförmigen Verjüngung. Ist der Druckknopf 3 bereits um die zweite Wegstrecke eingeführt, so wird durch diese Innenkontur 121 ein noch tieferes Einstecken des Druckknopfs 3 zumindest indirekt endgültig verhindert. Im vorliegenden Beispiel ist dabei schließlich das weitere Federelement, nämlich die Kegelfeder 5, zwischen dem Druckknopfkopf 3 und der Innenkontur 121 angeordnet und wird durch das weitere Hineindrücken des Druckknopfes 3 schließlich maximal komprimiert. In dieser Stellung ist der Druckknopf 3 tiefstmöglich in das Steckverbindergehäuse 11 eingeführt.

Gleichzeitig kann die mit ihrem Außenbereich 42 in einer Gehäusenut 124 der Durchgangsöffnung 12 angeordnete asymmetrische Spiralfeder 4 mit ihrem Innenbereich 41 in die Entriegelungsrille 321 des Druckknopfstifts 32 eintauchen, um somit in ihre Entriegelungsstellung zu kippen und in Zusammenwirken mit der Kegelfeder 5 eine Entriegelung zu ermöglichen.

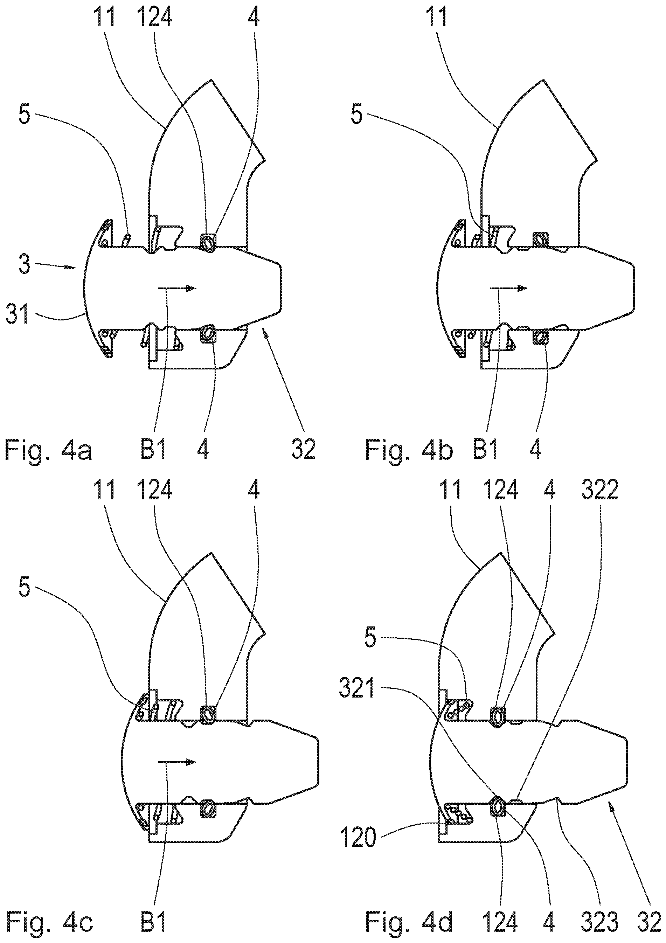

Die Fig. 4a - 4f verdeutlichen diesen Vorgang in einer Querschnittsdarstellung.

Die Fig. 4a zeigt den Druckknopf 3, der zunächst aus seiner darin dargestellten Halteposition heraus mit seinem Druckknopfstift 32 in Einsteckrichtung tiefer in die Durchgangsöffnung 12 des Steckverbindergehäuses 11 eingeführt werden soll. Die ringförmige asymmetrische Spiralfeder 4 ist mit ihrem äußeren Bereich 41 in der Gehäusenut 124 der Durchgangsöffnung 12 angeordnet. Dabei ist sie in ihrer Verriegelungsausrichtung ausgerichtet, lässt also nur eine Bewegung des Druckknopfs 3 in einer ersten Bewegungsrichtung B1, nämlich in Einführrichtung zu, verhindert aber eine Bewegung in einer zweiten Bewegungsrichtung B2, welche der ersten Bewegungsrichtung B1 entgegengesetzt ist. In der gezeigten Halteposition des Druckknopfs ist die Spiralfeder 4 in dieser Position des Druckknopfs 3 mit ihrem Innenbereich 41 in der Halterille 323 angeordnet. Grundsätzlich kann sie in dieser Position sowohl in ihrer Verriegelungsausrichtung als auch in ihrer Entriegelungsausrichtung ausgerichtet sein, denn sie könnte durch eine entsprechende Bewegung des Druckknopfs 3 zwischen diesen beiden Ausrichtungen kippen. Dennoch bedarf es auch bei Einnahme ihrer Verriegelungsausrichtung zumindest einer erheblichen Kraft, um den Druckknopf 3 aus dem Steckverbindergehäuse 11 zu entfernen, so dass dies nicht unabsichtlich geschehen kann. Im vorliegenden Beispiel ist die Spiralfeder 4 jedoch in ihrer Verriegelungsrichtung gezeigt, ermöglicht also ohne Weiteres ein tieferes Einstecken des Druckknopfs 3 in das Steckverbindergehäuse 11, wie es in der Fig. 4b dargestellt ist.

In der Fig. 4c ist dargestellt, wie der Druckknopf 3 um eine erste Wegstrecke in das Steckverbindergehäuse 11 hineingesteckt ist, wodurch die Spiralfeder 4 mit ihrem Innenbereich 41 in die Verriegelungsrille 322 eingreift. Durch die Verriegelungsrille 322 ist die Absicherung gegen ein Herausziehen des Druckknopfs 3 aus dem Steckverbindergehäuse 11 noch verstärkt. Der Druckknopf 3 befindet sich dabei in einer die Steckverbindung verriegelnden Position, d. h. der Druckknopf 3 kann in dieser Stellung das Steckverbindergehäuse 11 mit einem hier nicht gezeigten Gegensteckverbindergehäuse 21 verriegeln.

In der Fig. 4d ist Folgendes dargestellt: Durch das weitere Einstecken des Druckknopfs 3 um eine zusätzliche zweite Wegstrecke gelangt die Spiralfeder mit ihrem Innenbereich 41 in die Entriegelungsrille 321. Da die Entriegelungsrille 321 größer ist als die Verriegelungsrille 322, kann nun die Spiralfeder 4 durch ein geringfügiges Herausbewegen des Druckknopfs 3 aus dem Steckverbindergehäuse 11 von ihrer Verriegelungsausrichtung in ihre Entriegelungsausrichtung kippen. Daher ist die Spiralfeder 4 an dieser Stelle in einer Zwischenposition dargestellt, in der sie gerade von ihrer Verriegelungsausrichtung in ihre Entriegelungsausrichtung kippt.

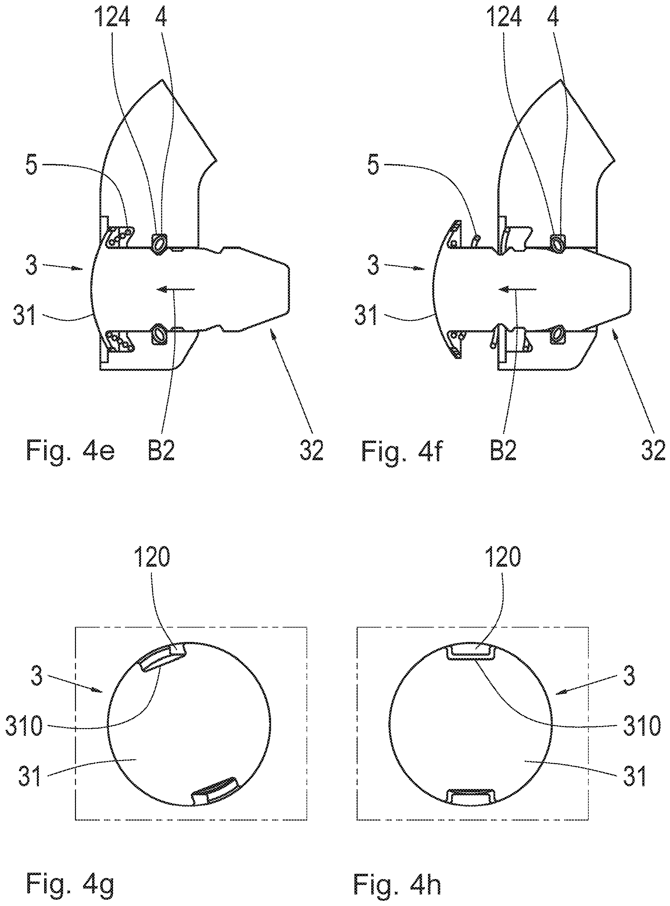

Die Fig. 4e zeigt den Druckknopf 3 in nahezu der gleichen Position und unterscheidet sich von der vorangegangenen Darstellung lediglich dadurch, dass die Spiralfeder 4 durch ein äußerst geringfügiges herausbewegen des Druckknopfes 3 aus dem Steckverbindergehäuse 11 in ihrer Entriegelungsausrichtung ausgerichtet ist.

Die Fig. 4f zeigt, wie der Druckkopf 3 gegenüber der vorangegangenen Darstellung um die erste und die zweite Wegstrecke aus dem Steckverbindergehäuse 11 herausbewegt wurde. Der Druckknopf 3 befindet sich somit in seiner Entriegelungsposition. Die Spiralfeder 4 ist gleichzeitig mit ihrem Innenbereich 41 wieder in der Halterille 323 angeordnet und ist weiterhin bereits durch ein, z. B. händisches, äußerst geringfügiges Hineindrücken des Druckknopfes 3 wieder in ihre Verriegelungsausrichtung gebracht. Auch in dieser Position kann sie einer Entnahme des Druckknopfs 3 durch die Kontur der Halterille 323 einen erheblichen Widerstand entgegensetzen, so dass eine solche Entnahme nicht ungewollt geschieht.

Die Fig. 4g zeigt den Druckknopf 3 in einer Draufsicht auf seinen Druckknopfkopf 31, d. h. die Blickrichtung entspricht der Symmetrieachse des Druckknopfstifts 32. Der Druckknopf 3 befindet sich in einer Verriegelungsstellung, da seine Polarisationsausnehmungen 310 sich noch nicht in der Nähe der Polarisationszapfen 120, also in Blickrichtung vor den Polarisationszapfen 120, befinden. Mit einfachen Worten gesagt, ist der Druckknopf 3 in seiner Verriegelungsstellung gegenüber seiner Entriegelungsstellung verdreht. Einerseits stößt somit beim Versuch, den Druckknopf 3 tiefer in das Steckverbindergehäuse 11 hineinzudrücken, der Druckknopfkopf 31 gegen die Polarisationszapfen 120 oder zumindest gegen einen Bereich der Polarisationszapfen 120. Andererseits ist die Spiralfeder 4 gleichzeitig, wie es in der Fig. 4c dargestellt ist, in ihrer Verriegelungsausrichtung ausgerichtet und mit ihrem Innenbereich 41 in der Verriegelungsrille 322 angeordnet. Dadurch verhindert sie auch ein Herausbewegen des Druckknopfes 3 aus dem Steckverbindergehäuse 11. Der Druckknopf 3 befindet sich somit in seiner Verriegelungsposition. Er kann ohne weiteres weder in der zweiten Bewegungsrichtung B2 aus dem Steckverbindergehäuse 11 herausbewegt werden noch kann er in der ersten Bewegungsrichtung B1 tiefer in das Steckverbindergehäuse 11 hineinbewegt werden. In dieser Verriegelungsposition kann er das Steckverbindergehäuse 11 z. B. mit einem hier nicht gezeigten Gegensteckverbindergehäuse 21 verriegeln. Dies kann z.B. dadurch geschehen, dass er mit seinem freistehenden Ende 324 in eine Ausnehmung des Gegensteckverbindergehäuses 21 greift und/oder indem er einen entsprechenden Mechanismus betätigt, der idealerweise das Steckverbindergehäuse 11 und das Gegensteckverbindergehäuse 21 aneinander verriegelt und zudem abdichtend gegeneinanderpresst.

Die Fig. 4h zeigt den Druckknopf 3 aus gleicher Ansicht in einer Entriegelungsstellung. Der Druckknopf 3 ist dabei gegenüber der vorangegangenen Darstellung um die Symmetrieachse des Druckknopfstifts 32 leicht nach rechts gedreht. Es ist leicht erkennbar, dass die Polarisationsausnehmungen 310 aus Blickrichtung nun direkt vor den Polarisationszapfen 120, d. h. in der Nähe der Polarisationszapfen 120, angeordnet sind. Dadurch ist es möglich, den Druckknopf 3 um die zweite Wegstrecke in das Steckverbindergehäuse 11 hineinzudrücken, indem die Polarisationsausnehmungen 310 des Druckknopfkopfs 31 die jeweiligen Polarisationszapfen 120 umgreifen. Dabei kann sich der Druckknopf 3 also aus seiner Verriegelungsposition, wie sie in der Fig. 4c dargestellt ist, in eine Position bewegen, wie sie in der Fig. 4d dargestellt ist.

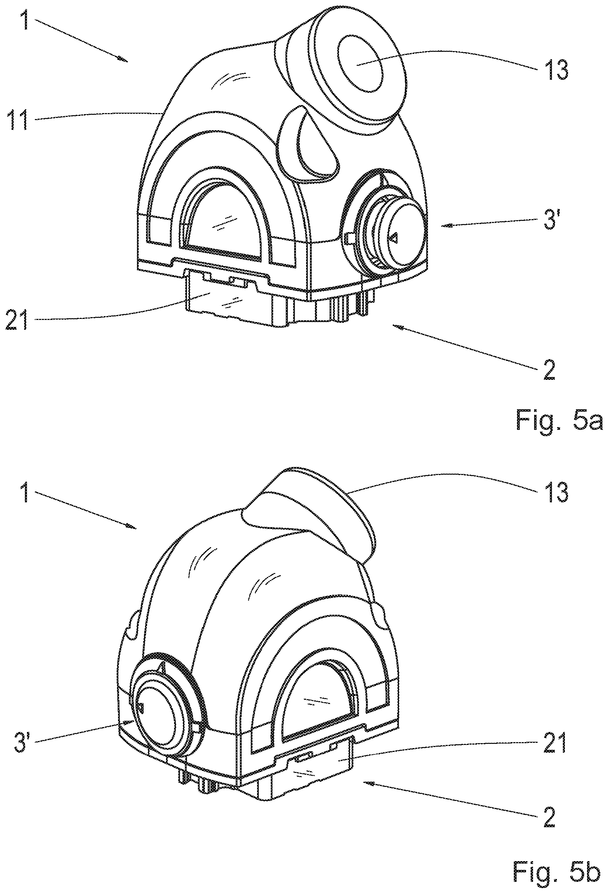

Die Fig. 5a bis 5c zeigen eine Steckverbindung, aufweisend das Steckverbindergehäuse 11 zusammen mit einem damit gesteckten Gegensteckverbindergehäuse 21. Das Steckverbindergehäuse 11 besitzt neben einer Kabeleinführöffnung 13 an zwei einander gegenüberliegenden Seiten jeweils die oben beschriebene Verriegelungseinrichtung, aufweisend unter anderem den Druckknopf 3', der dabei in einer zweiten Ausführung vorliegt. Diese zweite Ausführung des Druckknopfs 3' unterscheidet sich von der vorgenannten Ausführung 3 dadurch, dass die Polarisationsausnehmungen 310 aus der jeweiligen Blickrichtung, also von außen betrachtet, aus Designgründen verdeckt sind. Zur Erleichterung der Bedienung ist der Druckknopf 3' mit einem Dreieck als Pfeilmarkierung bezeichnet, um seine Verriegelungs-und seine Entriegelungsstellung zu kennzeichnen. Weiterhin ist auch das Steckverbindergehäuse 11 im Bereich der Durchgangsöffnung 12 mit einem weiteren Dreieck als Pfeilmarkierung und weiterhin in einem rechtwinkligen Winkelabstand dazu je mit einem Quadrat als Verriegelungssymbol bezeichnet.

In der Fig. 5a befindet sich der Druckknopf 3' in einer Verriegelungsstellung. Diese wird signalisiert, indem die Pfeilrichtung des Druckknopfs 3' nicht mit der Pfeilrichtung des Steckverbindergehäuses 1 übereinstimmt. Stattdessen weist der Pfeil des Druckknopfes 3' sogar in Richtung des viereckigen Verriegelungssymbols des Steckverbindergehäuses 11.

In der Fig. 5b ist der Druckknopf 3' in das Steckverbindergehäuse 11 um die erste Wegstrecke hineingedrückt. Da er sich in seiner Verriegelungsstellung befindet, schlägt sein Druckknopfkopf 31 an die in dieser Darstellung nicht sichtbaren Polarisationszapfen 120. Dadurch kann er kann nicht tiefer in das Steckverbindergehäuse 11 hineingedrückt werden.

Durch dieses Hineindrücken kann der Druckknopf 3 mit seinem frei stehenden Ende 324 z. B. durch eine nicht gezeigte Verriegelungsöffnung des Gegensteckergehäuses 21 in das Gegensteckverbindergehäuse 21 hineingreifen und das Steckverbindergehäuse 11 und das Gegensteckverbindergehäuse 21 miteinander verriegeln und idealerweise sogar abdichtend gegeneinanderpressen. Dies kann sowohl durch sein einfaches Eingreifen und insbesondere durch den konischen Verlauf seines freistehenden Endes geschehen. Alternativ oder ergänzend kann dies aber auch durch Zusammenwirken mit einem speziellen zusätzlichen Mechanismus optimiert werden.

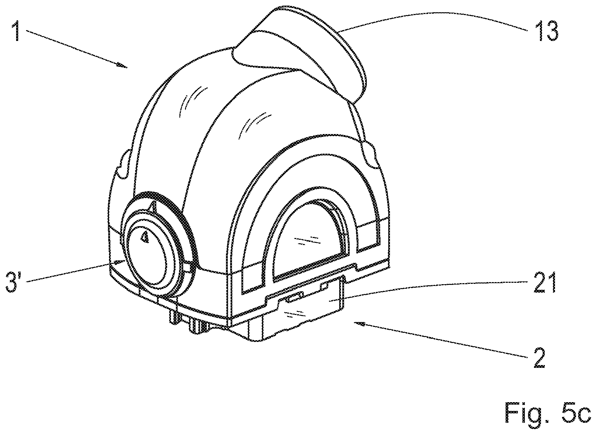

In der Fig. 5c ist der Druckknopf 3' in seine Entriegelungsstellung gedreht, wobei sein Pfeilsymbol in Richtung des Pfeilsymbols des Steckverbindergehäuses 11 weist. In dieser Entriegelungsstellung sind die in dieser Darstellung nicht sichtbaren Polarisationsausnehmungen 310 des Druckknopfs 3 in der Nähe der Polarisationszapfen 120 angeordnet. Somit ist es möglich, den Druckknopf 3' nun auch um die zweite Wegstrecke in die Durchgangsöffnung 12 des Steckverbindergehäuses 11 hineinzudrücken, wobei die Polarisationsausnehmungen 310 des Druckknopfkopfs 31 die Polarisationszapfen 120 umgreifen. Dadurch kann, wie zuvor bereits beschrieben, der Druckknopf 3' vom Steckverbindergehäuse 11 entrasten und durch die Kegelfeder 5 aus dem Steckverbindergehäuse 11 herausgedrückt werden. Somit kann letztlich eine Entriegelung des Steckverbindergehäuses 11 von dem Gegensteckverbindergehäuse 21 stattfinden.

Auch wenn in den Figuren verschiedene Aspekte oder Merkmale jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden Der Schutzbereich wird durch die Patentansprüche bestimmt.

### Bezugszeichenliste

- 1: Steckverbinder
- 11: Steckverbindergehäuse
- 12, 12': Durchgangsöffnung, Gehäusebohrung
- 120: Polarisationszapfen
- 121: Innenkontur
- 124, 124': Gehäusenut
- 13: Kabeleinführöffnung
- 2: Gegensteckverbinder
- 21: Gegesteckverbindergehäuse
- 3, 3': Druckknopf
- 31: Druckknopfkopf
- 310: Polarisationsausnehmung
- 32, 32': Druckknopfstift, Stift
- 321, 321': Entriegelungsrille
- 322, 322': Verriegelungsrille
- 323: Halterille
- 324: freistehendes Ende des Druckknopfstifts
- 4: asymmetrische Spiralfeder
- 40: einzelne Spirale der asymmetrischen Spiralfeder
- 41: Innenbereich der asymmetrischen Spiralfeder
- 42: Außenbereich der asymmetrischen Spiralfeder
- 5: weiteres Federelement, Kegelfeder
- A1: große Achse der einzelnen Spirale
- A2: kleine Achse der einzelnen Spirale
- B1: erste Bewegungsrichtung in Einführrichtung
- B2: zweite Bewegungsrichtung entgegen der Einführrichtung
- R: Ringebene der Spiralfeder

## Patentansprüche

1. Steckverbinder (1), der zumindest Folgendes aufweist:
- ein Steckverbindergehäuse (11) mit mindestens einer Durchgangsöffnung (12), die eine Gehäusenut (124) aufweist;
- mindestens einen Druckknopf (3), aufweisend einen zumindest teilweise in der mindestens einen Durchgangsöffnung (12) angeordneten Druckknopfstift (32), der zumindest zwei umlaufende Rillen, nämlich eine Verriegelungsrille (322) und eine Entriegelungsrille (321), besitzt;
- in jeder Durchgangsöffnung (12) eine mit ihrem Außenbereich (42) in der Gehäusenut (124) angeordnete, ringförmig ausgeführte asymmetrische Spiralfeder (4), die relativ zur Durchgangsöffnung (12) und zum Druckknopfstift (32) zumindest zwei verschiedene Ausrichtungen, nämlich eine Verriegelungsausrichtung und eine Entriegelungsausrichtung, einnehmen kann,
o wobei die Spiralfeder (4) in ihrer Verriegelungsausrichtung ein Hineinbewegen des Druckknopfstifts (32) in das Steckverbindergehäuse (11) ermöglicht und ein Hinausbewegen des Druckknopfstifts (32) aus dem Steckverbindergehäuse (11) verhindert, und
o wobei die Spiralfeder (4) in ihrer Entriegelungsausrichtung ein Hinausbewegen des Druckknopfstifts (32) aus dem Steckverbindergehäuse (11) ermöglicht und ein Hineinbewegen des Druckknopfstifts (32) in das Steckverbindergehäuse (11) verhindert, und
o wobei die Spiralfeder (4) von ihrer Verriegelungsausrichtung in ihre Entriegelungsausrichtung kippbar ist, wenn sie mit ihrem Innenbereich (41) in der Entriegelungsrille (321) angeordnet ist,
**dadurch gekennzeichnet, dass**
- der Druckknopfstift (32) zusätzlich noch eine dritte umlaufende Rille, nämlich eine Halterille (323), besitzt,
o wobei die Spiralfeder (4) von ihrer Entriegelungsausrichtung in ihre Verriegelungsausrichtung kippbar ist, wenn sie mit ihrem Innenbereich (41) in der Halterille (323) angeordnet ist.

2. Steckverbinder (1) nach Anspruch 1, wobei die Entriegelungsrille (321) und die Halterille (323) jeweils tiefer sind als die Verriegelungsrille (322).

3. Steckverbinder (1) nach einem der vorstehenden Ansprüche, wobei die Entriegelungsrille (321) und die Halterille (323) jeweils breiter sind als die Verriegelungsrille (322).

4. Steckverbinder (1) nach einem der vorstehenden Ansprüche, wobei die Verriegelungsrille (322) am Druckknopfstift (32) zwischen der Entriegelungsrille (321) und der Halterille (323) angeordnet ist.

5. Steckverbinder (1) nach einem der vorstehenden Ansprüche, wobei der Druckknopf (3) in einer das Steckverbindergehäuse (11) verriegelnden Position in der Durchgangsöffnung (12) verrastbar ist, indem der Innenbereich (41) der in ihrer Verriegelungsausrichtung ausgerichteten Spiralfeder (4) in der Verriegelungsrille (322) angeordnet ist.

6. Steckverbinder (1) nach einem der vorstehenden Ansprüche, wobei der Steckverbinder (1) weiterhin mindestens ein zusätzliches Federelement (5) zum automatischen Hinausbewegen des Druckknopfs (3) aus dem Steckverbindergehäuse (11) besitzt.

7. Steckverbinder (1) nach Anspruch 6, wobei es sich bei dem zusätzlichen Federelement (5) um eine Kegelfeder (5) handelt.

8. Steckverbinder (1) nach einem der vorstehenden Ansprüche, wobei die Spiralfeder (4) einerseits durch ein Hinausbewegen des Druckknopfstifts (32) aus dem Steckverbindergehäuse (11) von ihrer Verriegelungsausrichtung in ihre Entriegelungsausrichtung kippbar ist, während sie mit ihrem Innenbereich (41) in der Entriegelungsrille (321) angeordnet ist, und dass die Spiralfeder (4) zum anderen durch ein Hineinbewegen des Druckknopfstifts (32) in das Steckverbindergehäuse (11) von ihrer Entriegelungsausrichtung in ihre Verriegelungsausrichtung kippbar ist, während sie mit ihrem Innenbereich (41) in der Halterille (323) angeordnet ist.

9. Steckverbinder (1) nach einem der vorstehenden Ansprüche, wobei der Druckknopf (3) einen Druckknopfkopf (31) besitzt, der einen Durchmesser besitzt, der größer ist als der Durchmesser des Druckknopfstifts (32), wobei der Druckknopfkopf (31) mindestens eine Polarisationsausnehmung (310) aufweist, durch die er mit mindestens einem Polarisationszapfen (120) der Durchgangsöffnung (12) zusammenwirkt, so dass der Druckknopf (3) nur dann tief genug in das Steckverbindergehäuse (11) einsteckbar ist um die mit ihrem Außenbereich (42) in der Gehäusenut (124) eingreifende Spiralfeder (4) mit ihrem Innenbereich (41) in die Entriegelungsrille (321) einzubringen, wenn der Druckknopf (3) zuvor durch eine Rotation um die Achse seines Druckknopfstifts (32) in einer geeigneten Entriegelungsstellung ausgerichtet ist.

10. Steckverbinder (1) nach einem der vorstehenden Ansprüche, wobei es sich bei dem Steckverbinder (1) um einen Rechtecksteckverbinder handelt, wobei das Steckverbindergehäuse (11) zwei einander parallel gegenüberliegende Breitseiten und rechtwinklig dazu zwei einander parallel gegenüberliegende Schmalseiten aufweist, wobei das Steckverbindergehäuse (11) zwei Durchgangsöffnungen (12) besitzt, von denen jeweils eine in jeder der beiden Schmalseiten angeordnet ist, wobei der Steckverbinder (1) weiterhin zwei Druckknöpfe (3,3') und zwei asymmetrische Spiralfedern (4) besitzt, wobei jeder der Druckknöpfe (3,3') mit seinem Druckknopfstift (32) und jeweils einer der asymmetrischen Spiralfedern (4) in jeweils einer der Durchgangsöffnungen (12) angeordnet ist.

11. Steckverbinder (1) nach einem der vorstehenden Ansprüche, wobei der Steckverbinder (1) weiterhin zumindest einen im Steckverbindergehäuse (11) fixierten Kontaktträger, mindestens einen im Kontaktträger angeordneten elektrischen und/oder optischen und/oder pneumatischen Kontakt mit einem Steckbereich und einem Kabelanschlussbereich sowie mindestens eine im Steckverbindergehäuse (11) angeordnete Kabeleinführöffnung (13) zur Einführung mindestens eines mit dem Kabelanschlussbereich des mindestens einen Kontakts zu verbindenden Kabels besitzt.

12. Steckverbindung, gebildet aus einem Steckverbinder (1) gemäß einem der vorstehenden Ansprüche und einem damit verriegelbaren Gegensteckverbinder (2), wobei der Gegensteckverbinder (2) ein Gegensteckverbindergehäuse (21) aufweist, wobei das Gegensteckverbindergehäuse (21) zumindest eine Verriegelungsöffnung aufweist, in welche der mindestens eine Druckknopf (3, 3') des Steckverbinders (1) im verriegelten Zustand mit seinem Druckknopfstift (32) eingreift.

13. Verfahren zur Verriegelung eines Steckverbindergehäuses (11) mit einem Gegensteckverbindergehäuse (21), aufweisend folgende Schritte:
A. Zusammenfügen des Steckverbindergehäuses (11) mit dem Gegensteckverbindergehäuse (21);
B. Hineindrücken eines Druckknopfes (3,3') in das Steckverbindergehäuse (11) in einer ersten Richtung (B1) um eine erste Wegstrecke, wobei
b1. ein Druckknopfstift (32) des Druckknopfes (3,3') in eine Durchgangsöffnung (12) des Steckverbindergehäuses (11) hineingedrückt wird, wodurch
b2. eine ringförmig ausgeführte, mit ihrem Außenbereich (42) in einer Gehäusenut (124) der Durchgangsöffnung (12) angeordnete, asymmetrische Spiralfeder (4) in ihre Verriegelungsausrichtung gekippt wird, woraufhin
C. die Spiralfeder (4) entlang des Druckknopfstifts (32) relativ zu diesem um die erste Wegstrecke bewegt und so in ihrer Verriegelungsausrichtung mit ihrem Innenbereich (41) in eine umlaufende Verriegelungsrille (322) des Druckknopfstifts (32) gebracht wird, um dadurch das Steckverbindergehäuse (11) mit dem Gegensteckverbindergehäuse (21) zu verriegeln, **dadurch gekennzeichnet, dass**
die asymmetrische Spiralfeder (4) in Verfahrensschritt b2 mit ihrem Innenbereich (41) in einer umlaufenden Halterille (323) des Druckknopfstifts (32) zunächst in ihrer Entriegelungsausrichtung angeordnet ist, bevor sie (4) in ihre besagte Verriegelungsausrichtung gekippt wird.

14. Verfahren zur Entriegelung eines zuvor gemäß Anspruch 13 verriegelten Steckverbindergehäuses (11) von dem Gegensteckverbindergehäuse (21), wobei in einem Verfahrensschritt
L. das Steckverbindergehäuse (11) vom Gegensteckverbindergehäuse (21) entriegelt wird
**dadurch gekennzeichnet, dass**
das Verfahren zuvor folgende Schritte aufweist:
F. Drehen des Druckknopfes (3) um eine Symmetrieachse seines Druckkopfstifts (32) in eine Entriegelungsstellung, wobei
f1. mindestens eine Polarisationsausnehmung (310) des Druckknopfstifts (32) in die Nähe eines mindestens einen Polarisationszapfens (120) der Durchgangsöffnung (12) gebracht wird,
G. weiteres Hineindrücken des Druckknopfes in die Durchgangsöffnung (12) des Steckverbindergehäuses (11) in der ersten Richtung (B1) um eine zweite Wegstrecke, wobei
g1 der Druckknopfkopf (31) ebenfalls in die Durchgangsöffnung (12) eintaucht, wobei seine mindestens eine Polarisationsausnehmung (310) den mindestens einen Polarisationszapfen (120) der Durchgangsöffnung (12) umgreift, und wobei
g2 die in ihrer Verriegelungsrichtung ausgerichtete Spiralfeder (4) mit ihrem Innenbereich (41) aus der umlaufenden Verriegelungsrille (322) des Verriegelungsstifts (32) des Druckknopfs (3) entfernt wird und entlang des Druckknopfstifts (32) um die zweite Wegstrecke zu der Entriegelungsrille (321) des Druckknopfstifts (32) gelangt,
H. woraufhin
h1 ein noch tieferes Hineindrücken des Druckknopfs (3) durch eine Innenkontur (121) der Durchgangsöffnung (12) verhindert wird, während gleichzeitig
h2 die in ihrer Verriegelungsausrichtung ausgerichtete Spiralfeder (4) mit ihrem Innenbereich (41) in die Entriegelungsrille (321) eintaucht,
I. woraufhin
i1 ein weiteres Federelement den Druckknopf (3) zunächst nur geringfügig in einer zweiten Richtung bewegt, welche der ersten Richtung entgegengesetzt ist, wobei
i2 die mit ihrem Innenbereich (41) in der Entriegelungsrille (321) angeordnete Spiralfeder (4) von ihrer Verriegelungsausrichtung in ihre Entriegelungsausrichtung kippt, woraufhin
J. der Druckknopfkopf (31) von dem zweiten Federelement aus dem Steckverbindergehäuse in der zweiten Richtung sowohl um die zweite als auch um die erste Wegstrecke herausgedrückt wird, bis schließlich
K. die Spiralfeder (4) mit ihrem Innenbereich (41) in eine Halterille des Druckknopfstifts (32) eintaucht und den Druckknopf (3) in seiner Entriegelungsposition am Steckverbindergehäuse hält.

15. Verfahren nach Anspruch 14, wobei in Verfahrensschritt H die unter Punkt h1 beschriebene Verhinderung des noch tieferen Hineindrückens des Druckknopfs (3) durch die Innenkontur (121) der Durchgangsöffnung (12) dadurch verhindert wird, dass der Druckknopfkopf (31) gegen ein erstens Ende des bereits vollständig komprimierten weitere Federelements (5) drückt und somit durch die Innenkontur (121), an welche das Federelement (5) mit seinem zweiten Ende stößt, an einem noch tieferen Hineinbewegen ins Steckverbindergehäuse (11) endgültig gehindert wird.

## Claims

1. Plug-in connector (1) having at least the following:
- a plug-in connector housing (11) with at least one passage opening (12) having a housing channel (124) ;
- at least one pushbutton (3) having a pushbutton pin (32) which is arranged at least partially in the at least one passage opening (12) and has at least two circumferential grooves, namely a locking groove (322) and a release groove (321);
- in each passage opening (12), an annular, asymmetric coil spring (4) which is arranged with its outer region (42) in the housing channel (124) and which can assume at least two different orientations relative to the passage opening (12) and to the pushbutton pin (32), namely a locking orientation and a release orientation,
o wherein, in its locking orientation, the coil spring (4) allows the pushbutton pin (32) to move into the plug-in connector housing (11) and prevents the pushbutton pin (32) from moving out of the plug-in connector housing (11), and
o wherein, in its release orientation, the coil spring (4) allows the pushbutton pin (32) to move out of the plug-in connector housing (11) and prevents the pushbutton pin (32) from moving into the plug-in connector housing (11), and
o wherein the coil spring (4) can be tilted from its locking orientation into its release orientation when it is arranged with its inner region (41) in the release groove (321),
**characterized in that**
- the pushbutton pin (32) in addition also has a third circumferential groove, namely a holding groove (323),
o wherein the coil spring (4) can be tilted from its release orientation into its locking orientation when it is arranged with its inner region (41) in the holding groove (323) .

2. Plug-in connector (1) according to Claim 1, wherein the release groove (321) and the holding groove (323) are each deeper than the locking groove (322).

3. Plug-in connector (1) according to either of the preceding claims, wherein the release groove (321) and the holding groove (323) are each wider than the locking groove (322).

4. Plug-in connector (1) according to one of the preceding claims, wherein the locking groove (322) is arranged on the pushbutton pin (32) between the release groove (321) and the holding groove (323).

5. Plug-in connector (1) according to one of the preceding claims, wherein the pushbutton (3) can be latched in a position in the passage opening (12) that locks the plug-in connector housing (11), in that the inner region (41) of the coil spring (4) oriented in its locking orientation is arranged in the locking groove (322).

6. Plug-in connector (1) according to one of the preceding claims, wherein the plug-in connector (1) furthermore has at least one additional spring element (5) for automatically moving the pushbutton (3) out of the plug-in connector housing (11).

7. Plug-in connector (1) according to Claim 6, wherein the additional spring element (5) is a conical spring (5) .

8. Plug-in connector (1) according to one of the preceding claims, wherein the coil spring (4) firstly can be tilted from its locking orientation into its release orientation by a movement of the pushbutton pin (32) out of the plug-in connector housing (11) while said spring is arranged with its inner region (41) in the release groove (321), and in that the coil spring (4) secondly can be tilted from its release orientation into its locking orientation by a movement of the pushbutton pin (32) into the plug-in connector housing (11) while said spring is arranged with its inner region (41) in the holding groove (323).

9. Plug-in connector (1) according to one of the preceding claims, wherein the pushbutton (3) has a pushbutton head (31) with a diameter which is greater than the diameter of the pushbutton pin (32), wherein the pushbutton head (31) has at least one polarization recess (310) by means of which it cooperates with at least one polarization peg (120) of the passage opening (12), so that the pushbutton (3) can only be inserted sufficiently deeply into the plug-in connector housing (11) to bring the coil spring (4), which has its outer region (42) engaged in the housing channel (124), with its inner region (41) into the release groove (321) when the pushbutton (3) has previously been oriented into a suitable release position by rotation about the axis of its pushbutton pin (32).

10. Plug-in connector (1) according to one of the preceding claims, wherein the plug-in connector (1) is a rectangular plug-in connector, wherein the plug-in connector housing (11) has two mutually opposite parallel wide sides and, at right angles thereto, two mutually opposite parallel narrow sides, wherein the plug-in connector housing (11) has two passage openings (12), respectively one of which is arranged in each of the two narrow sides, wherein the plug-in connector (1) furthermore has two pushbuttons (3, 3') and two asymmetric coil springs (4), wherein each of the pushbuttons (3, 3') with its pushbutton pin (32) and respectively one of the asymmetric coil springs (4) is arranged in respectively one of the passage openings (12).

11. Plug-in connector (1) according to one of the preceding claims, wherein the plug-in connector (1) furthermore has at least one contact carrier fixed in the plug-in connector housing (11), at least one electrical and/or optical and/or pneumatic contact arranged in the contact carrier and having a plug-in region and a cable connecting region, and also at least one cable insertion opening (13) arranged in the plug-in connector housing (11) for insertion of at least one cable to be connected to the cable connecting region of the at least one contact.

12. Plug-in connection, formed by a plug-in connector (1) according to one of the preceding claims and a counter plug-in connector (2) which can be locked thereto, wherein the counter plug-in connector (2) has a counter plug-in connector housing (21), wherein the counter plug-in connector housing (21) has at least one locking opening into which the pushbutton pin (32) of at least one pushbutton (3, 3') of the plug-in connector (1) engages in the locked state.

13. Method for locking a plug-in connector housing (11) to a counter plug-in connector housing (21), having the following steps:
A. joining the plug-in connector housing (11) to the counter plug-in connector housing (21);
B. pressing a pushbutton (3, 3') into the plug-in connector housing (11) in a first direction (B1) by a first distance, wherein
b1. a pushbutton pin (32) of the pushbutton (3, 3') is pressed into a passage opening (12) of the plug-in connector housing (11), as a result of which
b2. an annular, asymmetric coil spring (4) which is arranged with its outer region (42) in a housing channel (124) of the passage opening (12) is tilted into its locking orientation, whereupon
C. the coil spring (4) moves along the pushbutton pin (32) relative thereto by the first distance and thus is brought into its locking orientation with its inner region (41) in a circumferential locking groove (322) of the pushbutton pin (32), in order thereby to lock the plug-in connector housing (11) to the counter plug-in connector housing (21), **characterized in that,**
in method step b2, the asymmetric coil spring (4) is arranged with its inner region (41) in a circumferential holding groove (323) of the pushbutton pin (32), initially in its release orientation, before said spring (4) is tilted into its said locking orientation.

14. Method for releasing a plug-in connector housing (11), previously locked according to Claim 13, from the counter plug-in connector housing (21), wherein, in a method step
L. the plug-in connector housing (11) is released from the counter plug-in connector housing (21),
**characterized in that**
the method has the following steps which precede said step L.:
F. rotating the pushbutton (3) about an axis of symmetry of its pushbutton pin (32) into a release position, wherein
f1. at least one polarization recess (310) of the pushbutton pin (32) is brought into the vicinity of an at least one polarization peg (120) of the passage opening (12),
G. further pressing of the pushbutton into the passage opening (12) of the plug-in connector housing (11) in the first direction (B1) by a second distance, wherein
g1 the pushbutton head (31) likewise dips into the passage opening (12), wherein its at least one polarization recess (310) surrounds the at least one polarization peg (120) of the passage opening (12), and wherein
g2 the inner region (41) of the coil spring (4), oriented in its locking orientation, is withdrawn from the circumferential locking groove (322) of the locking pin (32) of the pushbutton (3) and moved along the pushbutton pin (32) by the second distance to reach the release groove (321) of the pushbutton pin (32),
H. whereupon
h1 an even deeper pressing-in of the pushbutton (3) is prevented by an inner contour (121) of the passage opening (12), while at the same time
h2 the coil spring (4), oriented in its locking orientation, dips with its inner region (41) into the release groove (321),
I. whereupon
i1 a further spring element moves the pushbutton (3) initially only slightly in a second direction which is opposite to the first direction, wherein
i2 the coil spring (4), arranged with its inner region (41) in the release groove (321), is tilted from its locking orientation into its release orientation, whereupon
J. the pushbutton head (31) is pressed by the second spring element out of the plug-in connector housing in the second direction both by the second distance and by the first distance, until finally
K. the inner region (41) of the coil spring (4) dips into a holding groove of the pushbutton pin (32) and holds the pushbutton (3) in its release position on the plug-in connector housing.

15. Method according to Claim 14, wherein, in method step H, the prevention of the even deeper pressing-in of the pushbutton (3) by the inner contour (121) of the passage opening (12), described under point h1, is achieved in that the pushbutton head (31) presses against a first end of the already fully compressed further spring element (5) and thus is ultimately prevented from moving even deeper into the plug-in connector housing (11) by the inner contour (121) against which the second end of the spring element (5) butts.

## Revendications

1. Connecteur enfichable (1), lequel comprend au moins les éléments suivants :
- un boîtier de connecteur enfichable (11) comportant au moins une ouverture traversante (12) qui comprend une gorge de boîtier (124) ;
- au moins un bouton-pression (3), comprenant une tige de bouton-pression (32) disposée au moins partiellement dans l'au moins une ouverture traversante (12), laquelle tige possède au moins deux rainures périphériques, à savoir une rainure de verrouillage (322) et une rainure de déverrouillage (321) ;
- dans chaque ouverture traversante (12), un ressort spiral (4) asymétrique disposé par sa région extérieure (42) dans la gorge de boîtier (124) et réalisé de manière annulaire, lequel ressort peut adopter, par rapport à l'ouverture traversante (12) et à la tige de bouton-pression (32), au moins deux orientations différentes, à savoir une orientation de verrouillage et une orientation de déverrouillage,
o le ressort spiral (4), dans son orientation de verrouillage, permettant un déplacement de la tige de bouton-pression (32) dans le boîtier de connecteur enfichable (11) et empêchant un déplacement de la tige de bouton-pression (32) hors du boîtier de connecteur enfichable (11), et
o le ressort spiral (4), dans son orientation de déverrouillage, permettant un déplacement de la tige de bouton-pression (32) hors du boîtier de connecteur enfichable (11) et empêchant un déplacement de la tige de bouton-pression (32) dans le boîtier de connecteur enfichable (11), et
o le ressort spiral (4) pouvant être basculé de son orientation de verrouillage à son orientation de déverrouillage lorsqu'il est disposé dans la rainure de déverrouillage (321) par sa région intérieure (41),
**caractérisé en ce que**
- la tige de bouton-pression (32) possède en outre une troisième rainure périphérique, à savoir une rainure de retenue (323),
o le ressort spiral (4) pouvant être basculé de son orientation de déverrouillage à son orientation de verrouillage lorsqu'il est disposé dans la rainure de retenue (323) par sa région intérieure (41).

2. Connecteur enfichable (1) selon la revendication 1, la rainure de déverrouillage (321) et la rainure de retenue (323) étant respectivement plus profondes que la rainure de verrouillage (322).

3. Connecteur enfichable (1) selon l'une des revendications précédentes, la rainure de déverrouillage (321) et la rainure de retenue (323) étant respectivement plus larges que la rainure de verrouillage (322).

4. Connecteur enfichable (1) selon l'une des revendications précédentes, la rainure de verrouillage (322) étant disposée sur la tige de bouton-pression (32) entre la rainure de déverrouillage (321) et la rainure de retenue (323).

5. Connecteur enfichable (1) selon l'une des revendications précédentes, le bouton-pression (3) pouvant être bloqué dans l'ouverture traversante (12) dans une position verrouillant le boîtier de connecteur enfichable (11), par le fait que la région intérieure (41) du ressort spiral (4) orienté dans son orientation de verrouillage est disposée dans la rainure de verrouillage (322).

6. Connecteur enfichable (1) selon l'une des revendications précédentes, le connecteur enfichable (1) possédant en outre au moins un élément ressort supplémentaire (5) pour le déplacement automatique du bouton-pression (3) hors du boîtier de connecteur enfichable (11).

7. Connecteur enfichable (1) selon la revendication 6, l'élément ressort supplémentaire (5) étant un ressort conique (5).

8. Connecteur enfichable (1) selon l'une des revendications précédentes, le ressort spiral (4) pouvant d'une part être basculé de son orientation de verrouillage à son orientation de déverrouillage par un déplacement de la tige de bouton-pression (32) hors du boîtier de connecteur enfichable (11) pendant qu'il est disposé, par sa région intérieure (41), dans la rainure de déverrouillage (321), et le ressort spiral (4) pouvant d'autre part être basculé de son orientation de déverrouillage à son orientation de verrouillage par un déplacement de la tige de bouton-pression (32) dans le boîtier de connecteur enfichable (11) pendant qu'il est disposé, par sa région intérieure (41), dans la rainure de retenue (323).

9. Connecteur enfichable (1) selon l'une des revendications précédentes, le bouton-pression (3) possédant une tête de bouton-pression (31) qui présente un diamètre qui est supérieur au diamètre de la tige de bouton-pression (32), la tête de bouton-pression (31) comprenant au moins un évidement de polarisation (310) au moyen duquel elle coopère avec au moins un ergot de polarisation (120) de l'ouverture traversante (12), de sorte que le bouton-pression (3) ne puisse être enfiché que suffisamment profondément dans le boîtier de connecteur enfichable (11) pour introduire le ressort spiral (4), venant en prise dans la gorge de boîtier (124) par sa région extérieure (42), dans la rainure de déverrouillage (321) par sa région intérieure (41) lorsque le bouton-pression (3) est orienté préalablement dans une position de déverrouillage appropriée par une rotation autour de l'axe de sa tige de bouton-pression (32) .

10. Connecteur enfichable (1) selon l'une des revendications précédentes, le connecteur enfichable (1) étant un connecteur enfichable rectangulaire, le boîtier de connecteur enfichable (11) comprenant deux grands côtés mutuellement opposés parallèlement et, perpendiculairement à ceux-ci, deux petits côtés mutuellement opposés parallèlement, le boîtier de connecteur enfichable (11) possédant deux ouvertures traversantes (12), parmi lesquelles respectivement une est disposée dans chacun des deux petits côtés, le connecteur enfichable (1) possédant en outre deux boutons-pressions (3, 3') et deux ressorts spiraux asymétriques (4), chacun des boutons-pressions (3, 3'), par sa tige de bouton-pression (32) et respectivement l'un des ressorts spiraux asymétriques (4), étant disposé dans l'une des ouvertures traversantes (12) respectivement.

11. Connecteur enfichable (1) selon l'une des revendications précédentes, le connecteur enfichable (1) possédant en outre au moins un support de contact fixé dans le boîtier de connecteur enfichable (11), au moins un contact électrique et/ou optique et/ou pneumatique disposé dans le support de contact et doté d'une région d'enfichage et d'une région de raccordement de câble ainsi qu'au moins une ouverture d'insertion de câble (13) disposée dans le boîtier de connecteur enfichable (11) pour l'introduction d'au moins un câble à connecter à la région de raccordement de câble de l'au moins un contact.

12. Connexion enfichable, formée à partir d'un connecteur enfichable (1) selon l'une des revendications précédentes et d'un connecteur enfichable homologue (2) pouvant être verrouillé avec celui-ci, le connecteur enfichable homologue (2) comprenant un boîtier de connecteur enfichable homologue (21), le boîtier de connecteur enfichable homologue (21) comprenant au moins une ouverture de verrouillage dans laquelle l'au moins un bouton-pression (3, 3') du connecteur enfichable (1) vient en prise par sa tige de bouton-pression (32) à l'état verrouillé.

13. Procédé de verrouillage d'un boîtier de connecteur enfichable (11) avec un boîtier de connecteur enfichable homologue (21), comprenant les étapes suivantes :
A. assemblage du boîtier de connecteur enfichable (11) avec le boîtier de connecteur enfichable homologue (21) ;
B. enfoncement d'un bouton-pression (3, 3') dans le boîtier de connecteur enfichable (11) dans un premier sens (B1) sur une première distance,
b1. une tige (32) du bouton-pression (3, 3') étant enfoncée dans une ouverture traversante (12) du boîtier de connecteur enfichable (11), de sorte que
b2. un ressort spiral (4) asymétrique réalisé de manière annulaire et disposé par sa région extérieure (42) dans une gorge de boîtier (124) de l'ouverture traversante (12) est basculé dans son orientation de verrouillage, après quoi
C. le ressort spiral (4) est déplacé, de la première distance, le long de la tige de bouton-pression (32) par rapport à celle-ci et est ainsi amené dans son orientation de verrouillage avec sa région intérieure (41) dans une rainure de verrouillage périphérique (322) de la tige de bouton-pression (32), afin de verrouiller ainsi le boîtier de connecteur enfichable (11) avec le boîtier de connecteur enfichable homologue (21),
**caractérisé en ce que**
le ressort spiral (4) asymétrique est, à l'étape de procédé b2, disposé par sa région intérieure (41) dans une rainure de retenue périphérique (323) de la tige de bouton-pression (32) tout d'abord dans son orientation de déverrouillage avant qu'il (4) ne soit basculé dans sa dite orientation de verrouillage.

14. Procédé de déverrouillage d'un boîtier de connecteur enfichable (11) verrouillé préalablement selon la revendication 13 d'un boîtier de connecteur enfichable homologue (21), le boîtier de connecteur enfichable (11) étant déverrouillé du boîtier de connecteur enfichable homologue (21) dans une étape de procédé L., **caractérisé en ce que**
le procédé comprend préalablement les étapes suivantes :
F. rotation du bouton-pression (3) autour d'un axe de symétrie de sa tige de bouton-pression (32) dans une position de déverrouillage,
f1. au moins un évidement de polarisation (310) de la tige de bouton-pression (32) étant amené à proximité d'au moins un ergot de polarisation (120) de l'ouverture traversante (12),
G. enfoncement supplémentaire du bouton-pression dans l'ouverture traversante (12) du boîtier de connecteur enfichable (11) dans le premier sens (B1) sur une deuxième distance,
g1 la tête de bouton-pression (31) pénétrant également dans l'ouverture traversante (12), son au moins un évidement de polarisation (310) entourant l'au moins un ergot de polarisation (120) de l'ouverture traversante (12), et
g2 le ressort spiral (4) orienté dans sa direction de verrouillage étant retiré, par sa région intérieure (41), hors de la rainure de verrouillage périphérique (322) de la tige de verrouillage (32) du bouton-pression (3) et se déplaçant le long de la tige de bouton-pression (32) de la deuxième distance jusqu'à la rainure de déverrouillage (321) de la tige de bouton-pression (32),
H. après quoi
h1 un enfoncement encore plus profond du bouton-pression (3) est empêché par un contour intérieur (121) de l'ouverture traversante (12), pendant que simultanément
h2 le ressort spiral (4) orienté dans son orientation de verrouillage pénètre, par sa région intérieure (41), dans la rainure de déverrouillage (321),
I. après quoi
il un autre élément ressort déplace le bouton-pression (3) tout d'abord seulement légèrement dans un deuxième sens, lequel est opposé au premier sens,
i2 le ressort spiral (4) disposé par sa région intérieure (41) dans la rainure de déverrouillage (321) basculant de son orientation de verrouillage à son orientation de déverrouillage, après quoi
J. la tête de bouton-pression (31) est pressée par le deuxième élément ressort hors du boîtier de connecteur enfichable dans le deuxième sens à la fois de la première et de la deuxième distance jusqu'à ce que finalement
K. le ressort spiral (4) pénètre, par sa région intérieure (41), dans une rainure de retenue de la tige de bouton-pression (32) et maintienne le bouton-pression (3) dans sa position de déverrouillage sur le boîtier de connecteur enfichable.

15. Procédé selon la revendication 14, dans lequel, à l'étape de procédé H, l'empêchement, décrit au point h1, de l'enfoncement encore plus profond du bouton-pression (3) par le contour intérieur (121) de l'ouverture traversante (12) est obtenu par le fait que la tête de bouton-pression (31) presse contre une première extrémité de l'autre élément ressort (5) déjà complètement comprimé, et son déplacement encore plus profond dans le boîtier de connecteur enfichable (11) est donc définitivement empêché par le contour intérieur (121) contre lequel l'élément ressort (5) bute par sa deuxième extrémité.
